# EUROPÄISCHE PATENTSCHRIFT

(11) **EP 1 069 352 B1**
(45) Veröffentlichungstag und Bekanntmachung des Hinweises auf die Patenterteilung: **21.05.2003**
(21) Anmeldenummer: 99118842.6
(22) Anmeldetag: 24.09.1999
(51) Int. Cl.: F16K 1/22, F02D 9/10

(54) **Drosselklappenstutzen**
Throttle valve support
Support de vanne d'étranglement

(30) Priorität: 16.07.1999 DE 19932881; 16.07.1999 DE 19932878
(43) Veröffentlichungstag der Anmeldung: 17.01.2001
(73) Patentinhaber: Siemens Aktiengesellschaft, 80333 München (DE)
(72) Erfinder: Welteroth, Peter, 53783 Eitorf (DE); Sauerschell, Wolfgang, 61440 Oberursel (DE); Bornmann, Gerd, 65239 Hochheim (DE); Bachnak, Nouhad, 60326 Frankfurt (DE)

(56) Entgegenhaltungen:
- DE-A- 3 924 611
- DE-A- 4 017 671
- PATENT ABSTRACTS OF JAPAN vol. 1998, no. 13, 30. November 1998 (1998-11-30) & JP 10 227233 A (UNISIA JECS CORP), 25. August 1998 (1998-08-25)
- PATENT ABSTRACTS OF JAPAN vol. 016, no. 498 (M-1325), 15. Oktober 1992 (1992-10-15) & JP 04 183940 A (HITACHI LTD;OTHERS: 01), 30. Juni 1992 (1992-06-30)

## Beschreibung

Die Erfindung befaßt sich mit einem Drosselklappenstutzen mit Torquer-Antrieb, bei welchem der Rotor eines elektrischen Antriebsmotors unmittelbar auf der Welle der Drosselklappe sitzt. Die Erfindung betrifft weiterhin ein Verfahren zur Montage eines solchen Drosselklappenstutzens.

Eine derartige Anordnung des Rotors kommt im Vergleich zu über Getriebestufen mit der Drosselklappenwelle gekoppelten Motoren mit sehr wenigen Bauteilen aus und benötigt auch nur einen geringeren Bauraum. Zu berücksichtigen ist allerdings, daß die Drosselklappe zu Schwingungen angeregt wird. Während bei Lösungen (siehe z.B. DE3924611) mit separat gelagertem Rotor ein im Gehäuse des Drosselklappenstutzens verankerter Stift, der in eine Umfangsnut an der Drosseklappenwelle mit bestimmtem Spiel eingreift, zur axialen Sicherung der Welle ausreichend sein kann, führt die hohe Masse des Rotors bei einem Drosselklappenstutzen mit Torquer-Antrieb unter den Schwingbewegungen zu einer sehr großen Flächenbelastung, so daß es bei kleinen Stützflächen schnell zu einem Verschleiß der axialen Anlageflächen und damit zu einem Anstieg des Axialspiels kommen kann. Die Drosselklappe wird schwergängiger und kann im extremsten Fall verklemmen. Als weiteres Problem bei der axialen Festlegung der Drosselklappenwelle kommt hinzu, daß nur ein begrenzter axialer Bauraum zur Verfügung steht, da neben der Axialsicherung und dem Rotor auch noch ein Potentiometer zur Erfaßung der Iststellung der Drosselklappe und die Wälzlager zur Lagerung der Drosselklappenwelle in dem Drosselklappengehäuse vorgesehen werden muß. Es ist zwar grundsätzlich möglich, diese Elemente zu beiden Seiten der Drosselklappe im Gehäuse anzuordnen, wodurch jedoch der Montageablauf erschwert wird.

Die Aufgabe der vorliegenden Erfindung besteht darin, eine Axialsicherung für einen Drosselklappenstutzen mit Torquer-Antrieb zu schaffen, die den höheren Beanspruchungen standhält und einfach zu montieren ist.

Erfindungsgemäß wird die Aufgabe durch einen Drosselklappenstutzen mit Torquer-Antrieb gelöst, bei welchem der Rotor eines elektrischen Antriebsmotors unmittelbar auf die Welle der Drosselklappe aufgepreßt ist, wobei zwischen der Drosselklappe und dem Rotor eine Axialsicherung in Form einer Sicherungsscheibe vorgesehen ist, die an der Welle oder an einem Drosselklappengehäuse axial festgelegt ist und an dem jeweils anderen Element in einen Spalt mit definiertem Axialspiel eingreift, und die beiden gehäuseseitigen axialen Anlageflächen der Sicherungsscheibe durch ein mit dem Gehäuse verschraubtes Befestigungsblech und einen am Gehäuse vorgesehenen Anschlag gebildet sind.

Die erfindungsgemäße Lösung bietet zunächst den Vorteil, daß die Sicherungsscheibe eine großflächige Anlage an den beiden Flanken des Spaltes schafft, so daß trotz der erhöhten Massenkräfte durch den auf der Drosselklappenwelle sitzenden Rotor des Elektromotores die Flächenbelastung und damit der Verschleiß gering ist, wodurch ein über die Lebensdauer konstantes Axialspiel sichergestellt wird.

Die axiale gehäuseseitige Festlegung mit Hilfe eines verschraubten Befestigungsbleches sorgt zudem für einen nur sehr kleinen notwendigen axialen Bauraum, der die aus Montagegründen vorteilhafte Anordnung der Axialsicherung zwischen der Drosselklappe und dem Rotor bei kurzer und damit steifer Drosselklappenwelle möglich macht.

In einer ersten bevorzugten Ausführungsform der Erfindung ist vorgesehen, daß die Sicherungsscheibe unter bestimmtem Axialspiel in einer Umfangsnut auf der Welle sitzt und gehäuseseitig mit Hilfe des Befestigungsbleches axial spielfrei festgelegt ist.

Bei dieser Ausführungsform läßt sich das Axialspiel mit geringem fertigungstechnischem Aufwand sehr genau einhalten, da bei bekannter Stärke der Sicherungsscheibe lediglich eine Umfangsnut mit bestimmter Breite in den Umfang der Drosselklappenwelle eingestochen werden muß. Die Sicherungsscheibe kann beispielsweise als C-Scheibe ausgebildet und seitlich in die Nut einschiebbar oder mittels zweier Halbschalen realisiert sein.

Weiterhin können das Befestigungsblech und die Sicherungsscheibe einstückig ausgebildet sein, wobei die Wellenöffnung schlüssellochförmig ausgebildet ist. Der Vorteil dieser Ausführungsform liegt in dem nochmals etwas geringeren axialen Bauraum und in der Verringerung der Teile. Der erweiterte Bereich des Schlüsselloches dient dabei dem Einführen der Welle vor der Montage in dem Drosselklappengehäuse. Auch eine offene Ausbildung der Schlüssellochöffnung ist denkbar.

Als Alternative zu einer in der Welle vorgesehenen Umfangsnut ist in einer weiteren Ausführungsform der Erfindung vorgesehen, daß die Sicherungsscheibe axial am Wellenumfang festgelegt ist und der Spalt am Gehäuse durch einen axialen Anschlag und eine Flanke des Befestigungsbleches definiert ist. Der axiale Anschlag kann mit einer Laufscheibe versehen sein.

Das Axialspiel ergibt sich bei dieser Variante aus der Differenz zwischen dem axialen Abstand des Gehäuseanschlags von der Anlagefläche des Befestigungsbleches und der Dicke der Sicherungsscheibe. Der feste Sitz der Sicherungsscheibe auf der Drosselklappenwelle wird vorzugsweise mit Hilfe einer Schweißverbindung hergestellt, wobei grundsätzlich auch eine Preßverbindung möglich ist, die unter Umständen jedoch eine stärkere Sicherungsscheibe erforderlich macht, um einen sicheren Sitz der Scheibe auf der Welle zu gewährleisten.

Gegenstand der vorliegenden Erfindung ist auch eine Verfahren zur Montage eines Drosselklappenstutzens der zuvor beschriebenen Art. Erfindungsgemäß ist dabei vorgesehen, daß zunächst der Drosselklappenstutzen vollständig vormontiert wird und erst abschließend vor dem Verschließen des Drosselklappengehäuses der Rotor auf die Welle aufgepreßt wird.

Der Vorteil dieses Montageverfahrens liegt darin, daß die Drosselklappenwelle von der Rotorseite in die meist als Nadellager ausgebildeten Lager eingeschoben werden kann und anschließend ohne Behinderung durch den Rotor die Axialsicherung und das Potentiometer montiert werden können. Das hohe Gewicht des Rotors würde femer die Handhabung bei der Montage erschweren.

Nachfolgend wird anhand der beigefügten Zeichnungen näher auf Ausführungsbeispiele der Erfindung eingegangen. Es zeigen:
- Fig. 1: einen Querschnitt eines Drosselklappenstutzens;
- Fig. 2: eine Ansicht der Axialsicherung der Drosselklappenwelle gemäß Fig. 1;
- Fig. 3: eine alternative Axialsicherung der Drosselklappenwelle gemäß Fig. 1;
- Fig. 4: einen Querschnitt einer weiteren Ausführungsform eines Drosselklappenstutzens;
- Fig. 5a: eine erste Ansicht der AxialSicherungsscheibe für die Drosselklappenwelle gemäß Fig. 4;
- Fig. 5b: eine zweite Ansicht der AxialSicherungsscheibe für die Drosselklappenwelle gemäß Fig. 4;
- Fig. 6: eine Ansicht des Befestigungsbleches zur axialen Festlegung gemäß Fig. 4;
- Fig. 7: einen Schnitt einer weiteren Ausführungsform eines Drosselklappenstutzens;
- Fig. 8: eine modifizierte Ausführungsform des Drosselklappenstutzens nach Fig. 7.

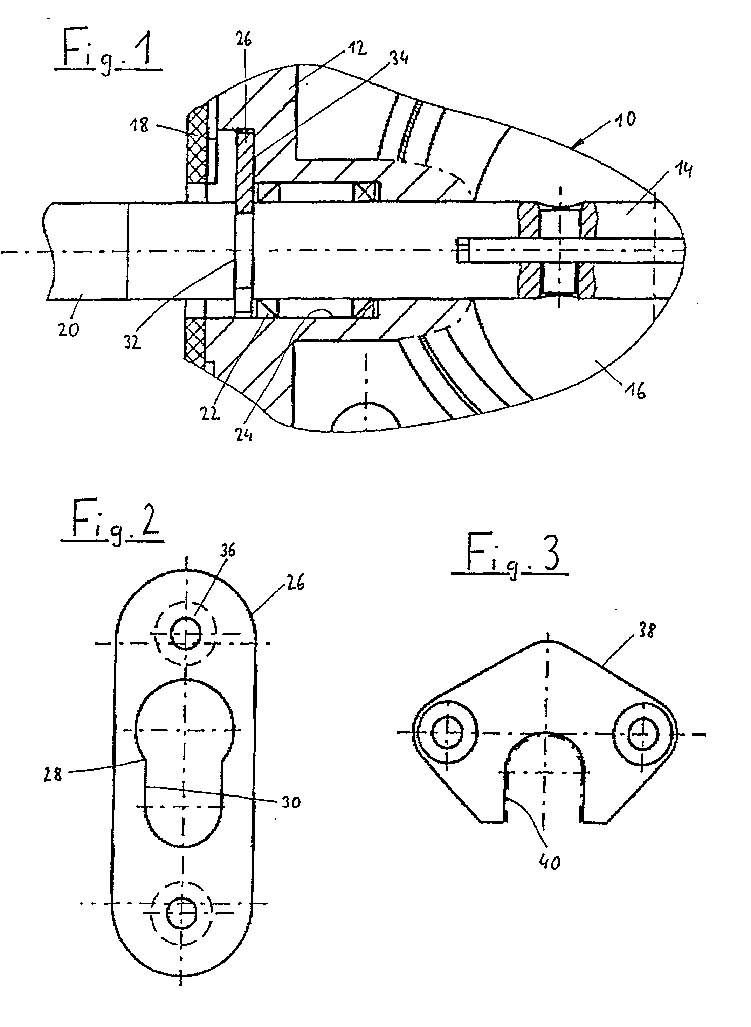

Der in Fig. 1 gezeigte Drosselklappenstutzen 10 besteht im wesentlichen aus einem Drosselklappengehäuse 12, einer in diesem gelagerten Drosselklappenwelle 14, welche die Drosselklappe 16 trägt, einem Potentiometer, von welchem nur die gehäuseseitig befestigte und zentrierte Potentiometerplatte 18 dargestellt ist, und einem Rotor (nicht dargestellt) eines elektrischen Antriebsmotores, der unmittelbar auf einen Passungsbereich 20 am freien Ende der Welle 14 aufpreßbar ist. Das Gehäuse ist im Bereich des Antriebsmotors durch einen Deckel (nicht dargestellt) verschließbar.

Die Lagerung der Welle 14 in dem Gehäuse 12 erfolgt auf beiden Seiten der Drosselklappe 16 mittels einer Nadellagerung 22, die beispielsweise aus einer unmittelbar in einer Gehäusebohrung 24 und auf der Welle 14 laufenden Nadelhülse bestehen kann. Zur axialen Sicherung der Welle 14 bei definiertem Axialspiel ist eine Sicherungsscheibe 26 vorgesehen (siehe auch Fig. 2 oder 3), die über eine schlüssellochförmige Öffnung 28 verfügt, deren Rand 30 im schmalen Bereich mit einer Umfangsnut 32 in der Welle 14 zusammenwirkt. Die Breite der Umfangsnut 32 ist mit Bezug auf die Dicke der Sicherungsscheibe 26 so gewählt, daß sich das gewünschte Axialspiel ergibt. Die axiale Lage der Welle 14 wird durch eine gehäuseseitige Anlagefläche 34 definiert, gegen welche die Sicherungsscheibe 26 mit Hilfe von Schrauben (nicht gezeigt) verschraubbar ist. Als Schrauben eignen sich wegen der geringen Stärke der Sicherungsscheibe 26 Senkkopfschrauben, die über Kegelbohrungen 36 die notwendigen Haltekräfte auf die Sicherungsscheibe 26 übertragen können.

Neben der in Fig. 2 dargestellten Ausführungsform mit einer als geschlossenes Schlüsselloch ausgebildeten Form der Öffnung ist auch eine in Fig. 3 dargestellte Variante einer Sicherungsscheibe 38 mit einer einseitig offenen Schlüssellochöffnung 40 denkbar.

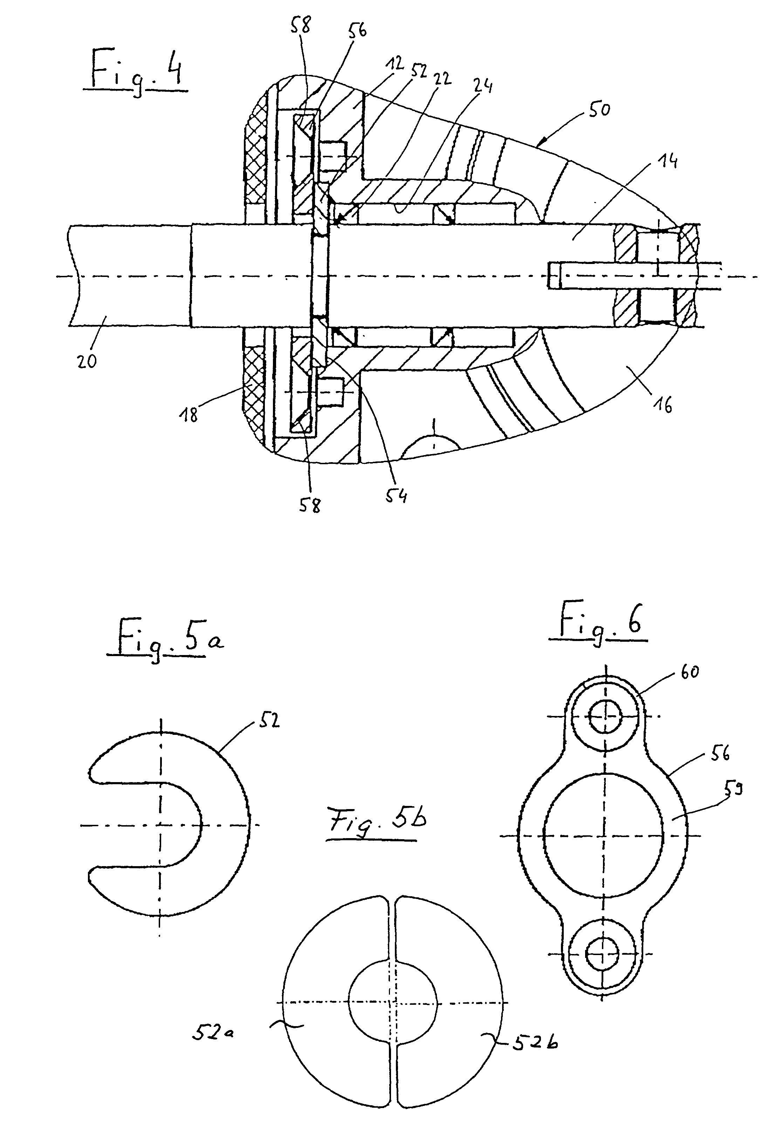

Eine weitere Ausführungsform eine Drosselklappenstutzens 50 ist in Fig. 4 dargestellt. Mit Ausnahme der Axialsicherung entspricht dieser Drosselklappenstutzen 50 dem zuvor beschriebenen Drosselklappenstutzen 10, weshalb identische Teile mit identischen Bezugszeichen versehen sind.

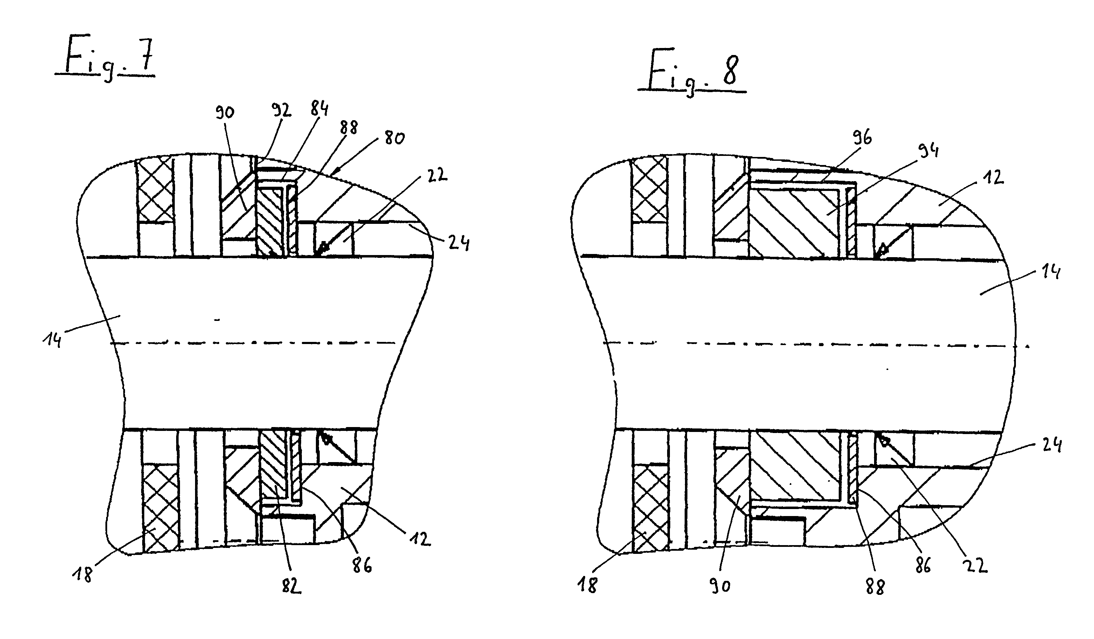

Statt einer einstückigen, unmittelbar mit dem Gehäuse 12 verschraubten Sicherungsscheibe weist der Drosselklappenstutzen 50 eine Sicherungsscheibe 52 in C-Form auf (Figur 5a), die in der Umfangsnut 32 der Welle 14 sitzt. Die Sicherungsscheibe 52 stützt sich axial an einem Gehäuseabsatz 54 ab, der die Lage der Welle bezüglich des Gehäuses 12 definiert. Die axiale Festlegung der Sicherungsscheibe 52 erfolgt mit Hilfe eines Befestigungsbleches 56, das wiederum mit Hilfe von Senkkopfschrauben (nicht gezeigt), die auf Kegelbohrungen 58 in dem Befestigungsblech 56 wirken, gegen das Gehäuse 12 verschraubt wird. Dabei wird die Sicherungsscheibe 52 zwischen dem Absatz 54 und dem Befestigungsblech 56 verspannt. Die Sicherungsscheibe kann alternativ aber auch aus zwei Halbschalen 52a, 52b gebildet sein. (Figur 5b)

Das Befestigungsblech 56 ist in Fig. 6 dargestellt. Es besteht im wesentlichen aus einem ringförmigen Haltebereich 59, dessen Innendurchmesser größer als der Außendurchmesser der Welle, jedoch kleiner als der Außendurchmesser der C-förmigen Sicherungsscheibe 52 ist. An den Ringbereich 59 schließen sich zwei Bohrungsbereiche 60 an, in welchen die Kegelbohrungen 58 angeordnet sind.

Eine weitere Variante eines Drosselklappenstutzens 80 ist in Fig. 7 gezeigt. Bei diesem Drosselklappenstutzen ist das Axialspiel nicht zwischen einer Sicherungsscheibe 82 und einer Umfangsnut in der Welle 14 vorgesehen, sondern das Axialspiel ergibt sich gehäuseseitig durch die Differenz der Breite eines Spaltes 84 zu der Dicke der Sicherungsscheibe 82, die als einfacher Ring auf den Außenumfang der Welle 14 aufgeschweißt ist. Der Spalt 84 wird begrenzt durch eine an einem Gehäuseabsatz 86 vorgesehene Laufscheibe 88 und ein Befestigungsblech 90, das gegen eine Anlagefläche 92 an dem Gehäuse 12 verschraubt ist.

Fig. 8 zeigt eine Abwandlung des Drosselklappenstutzens 80, bei welchem eine etwas stärkere Sicherungsscheibe 94 vorgesehen ist, deren fester Sitz auf der Welle 14 nicht mit Hilfe einer Schweißverbindung sondern über eine Preßverbindung gewährleistet ist. Die größere Stärke der Sicherungsscheibe 94, die einen entsprechend breiteren Spalt 96 erforderlich macht, ist notwendig, um einen sicheren Preßsitz zu ermöglichen.

Das Befestigungselement 90 entspricht sowohl bei der in Fig. 7 als auch der in Fig. 8 dargestellten Ausbildung des Drosselklappenstutzens 80 dem in Fig. 6 dargestellten Befestigungsblech 56, wobei es allerdings nicht zum Verspannen der Sicherungsscheibe eingesetzt wird, sondern lediglich eine axiale Anschlagfläche bei entsprechender Verlagerung der Welle 14 bildet.

Die Potentiometerplatten 18 sind bei allen zuvor beschriebenen Ausführungsformen axial nahe der Nadellagerungen 22 an dem Gehäuse 12 befestigt und zentriert, was durch die nur geringen axialen Bauraum beanspruchenden Axialsicherungen möglich ist. Die Nähe des Potentiometers zu der Lagerung sorgt für nur geringe Amplituden bei zu Schwingungen angeregter Welle 14, so daß eine genaue Istwerterfaßung möglich ist.

Die Montage der Drosselklappenstutzen 10, 50, 80 erfolgt in der Weise, daß zunächst die Welle 14 in die Lager 22 in dem Gehäuse 12 eingeschoben wird. Die Sicherungsscheibe 26, 52 oder 82 sitzt dabei bereits auf der Welle 14 und begrenzt den axialen Einschub durch Anlegen an die Anlagefläche 34, den Gehäuseabsatz 54 bzw. die Laufscheibe 88. Anschließend wird die Drosselklappe 16 montiert und die Welle durch Anschrauben der Sicherungsscheibe 26 oder des Befestigungselements 56 bzw. 90 axial festgelegt. Im nächsten Schritt wird die Potentiometerplatte 18 an dem Gehäuse 12 zentriert festgelegt. Der zugehörige Schleifer kann anschließend auf der Welle festgelegt werden. Abschließend wird der Rotor des Antriebsmotors auf die Fassung 20 aufgepreßt und das Gehäuse mit Hilfe eines Deckels verschlossen. Bei diesem Montageverfahren lassen sich alle Arbeitsvorgänge, mit Ausnahme der Montage der Drosselklappe auf der Welle, von der Rotorseite her ausführen, so daß sich ein einfacher Montageablauf ergibt.

Obwohl sowohl die Axialsicherung, als auch das Potentiometer 18 und der Rotor auf einer Seite der Drosselklappe 16 angeordnet sind, ergibt sich aufgrund der axial sehr schmal ausgeführten Axialsicherung nur eine relativ kurze Wellenlänge, die für eine hohe Steifigkeit sorgt und damit Schwingungen reduzieren hilft. Dennoch ermöglichen die großen axialen Anlageflächen geringe Flächenbelastungen, so daß der Verschleiß trotz der großen Rotormasse gering bleibt. Die Toleranzkette mit nur wenigen Maßen erlaubt auch eine präzise Einhaltung des Axialspiels bei der Fertigung.

## Patentansprüche

1. Drosselklappenstutzen mit Torquer-Antrieb, bei welchem der Rotor eines elektrischen Antriebsmotors unmittelbar auf die Welle (14) der Drosselklappe (16) aufgepreßt ist, wobei zwischen der Drosselklappe (16) und dem Rotor eine Axialsicherung in Form einer Sicherungsscheibe (26; 52; 82; 94) vorgesehen ist, die an der Welle (14) oder an einem Drosselklappengehäuse (12) axial festgelegt ist und an dem jeweils anderen Element in einen Spalt (32; 84; 96) mit definiertem Axialspiel eingreift, und die beiden gehäuseseitigen axialen Anlageflächen der Sicherungsscheibe (26; 52; 82; 94) durch ein mit dem Gehäuse (12) verschraubtes Befestigungsblech (26; 56; 90) und einen am Gehäuse (12) vorgesehenen Anschlag (34; 54; 88) gebildet sind.

2. Drosselklappenstutzen nach Anspruch 1, **dadurch gekennzeichnet, daß** die Sicherungsscheibe (26; 52) unter bestimmtem Axialspiel in einer Umfangsnut (32) auf der Welle (14) sitzt und gehäuseseitig mit Hilfe des Befestigungsbleches (26; 56) axial spielfrei festgelegt ist.

3. Drosselklappenstutzen nach Anspruch 2, **dadurch gekennzeichnet, daß** die Sicherungsscheibe (52) als C-Scheibe ausgebildet und seitlich in die Nut (32) einschiebbar ist.

4. Drosselklappenstutzen nach Anspruch 2 **dadurch gekennzeichnet, daß** die Sicherungsscheibe (52) zweiteilig als Halbschalen (52a, 52b) ausgeführt ist.

5. Drosselklappenstutzen nach Anspruch 2, **dadurch gekennzeichnet, daß** das Befestigungsblech und die Sicherungsscheibe (26) einstükkig ausgebildet sind, wobei die Wellenöffnung (28; 40) geschlossen oder offen schlüssellochförmig ausgebildet ist.

6. Drosselklappenstutzen nach Anspruch 1, **dadurch gekennzeichnet, daß** die Sicherungsscheibe (82; 94) axial am Wellenumfang festgelegt ist und der Spalt (84; 96) am Gehäuse (12) durch einen axialen Anschlag (88) und eine Flanke des Befestigungsbleches (90) definiert ist.

7. Drosselklappenstutzen nach Anspruch 6, **dadurch gekennzeichnet, daß** der axiale Anschlag mit einer Laufscheibe (88) versehen ist.

8. Drosselklappenstutzen nach einem der vorhergehenden Ansprüche, **dadurch gekennzeichnet, daß** das Befestigungsblech (26; 56; 90) mit Hilfe mehrerer Schrauben an dem Gehäuse (12) festgelegt ist.

9. Drosselklappenstutzen nach einem der vorhergehenden Ansprüche, **dadurch gekennzeichnet, daß** ein Potentiometer (18) zur Erfaßung der Ist-Stellung der Drosselklappe (16) zwischen der Axialsicherung und dem Rotor vorgesehen ist.

10. Drosselklappenstutzen nach Anspruch 9, **dadurch gekennzeichnet, daß** die Potentiometerplatte (18) an dem Gehäuse (12) und der Potentiometerschleifer an der Welle (14) festgelegt ist.

11. Verfahren zur Montage eines Drosselklappenstutzens (10; 50; 80) nach einem der vorhergehenden Ansprüche, **dadurch gekennzeichnet, daß** zunächst der Drosselklappenstutzen vollständig vormontiert wird und erst abschließend vor dem Verschließen des Drosselklappengehäuses (12) der Rotor auf die Welle (14) aufgepreßt wird.

## Claims

1. Throttle body with a Torquer drive, in which the rotor of an electric drive motor is press-fitted directly on to the shaft (14) of the throttle butterfly (16), an axial retention means in the form of a retaining washer (26; 52; 82; 94) being provided between the throttle butterfly (16) and the rotor, said retaining washer being fixed axially on the shaft (14) or on a throttle housing (12) and engaging with a defined axial play in a gap (32; 84; 96) on the other element, and the two housing-side axial contact surfaces of the retaining washer (26; 52; 82; 94) being formed by a fastening plate (26; 56; 90) screwed to the housing (12) and by a stop (34; 54; 88) provided on the housing (12).

2. Throttle body according to Claim 1, **characterized in that** the retaining washer (26; 52) is seated with a defined axial play on the shaft (14) in a circumferential groove (32) and is fixed without axial play on the housing side by means of the fastening plate (26; 56).

3. Throttle body according to Claim 2, **characterized in that** the retaining washer (52) is designed as a C washer and can be inserted laterally into the groove (32).

4. Throttle body according to Claim 2, **characterized in that** the retaining washer (52) is constructed in two parts in the form of half-shells (52a, 52b).

5. Throttle body according to Claim 2, **characterized in that** the fastening plate and the retaining washer (26) are of one-piece design, the shaft opening (28; 40) being designed in the shape of a continuous or discontinuous keyhole.

6. Throttle body according to Claim 1, **characterized in that** the retaining washer (82; 94) is fixed axially on the shaft circumference and the gap (84; 96) at the housing (12) is defined by an axial stop (88) and one flank of the fastening plate (90).

7. Throttle body according to Claim 6, **characterized in that** the axial stop is provided with a contact disk (88).

8. Throttle body according to one of the preceding claims, **characterized in that** the fastening plate (26; 56; 90) is fixed to the housing (12) by means of a plurality of screws.

9. Throttle body according to one of the preceding claims, **characterized in that** a potentiometer (18) is provided for the purpose of detecting the actual position of the throttle butterfly (16) between the axial retention means and the rotor.

10. Throttle body according to Claim 9, **characterized in that** the potentiometer plate (18) is fixed to the housing (12) and the potentiometer slider is fixed to the shaft (14).

11. Method for assembling a throttle body (10; 50; 80) in accordance with one of the preceding claims, **characterized in that** the throttle body is first fully preassembled, and the rotor is press-fitted on to the shaft (14) only at the final stage before the throttle housing (12) is closed.

## Revendications

1. Dispositif de montage de papillon des gaz comprenant un entraînement par couple, dans le cas duquel le rotor d'un moteur d'entraînement électrique est emmanché directement par pression sur l'arbre (14) du papillon des gaz (16), un dispositif d'immobilisation axiale étant prévu entre le papillon de gaz (16) et le rotor sous la forme d'une plaquette d'immobilisation (26 ; 52 ; 82 ; 94), laquelle est rendue fixe axialement par rapport à l'arbre (14) ou à un boîtier (12) de papillon des gaz et s'engage quant à l'autre élément respectif dans un intervalle (32 ; 84 ; 96) avec un jeu axial déterminé, et les deux surfaces axiales sur le boîtier assurant le contact pour la plaquette d'immobilisation (26 ; 52 ; 82 ; 94) sont formées par une tôle de fixation (26 ; 56 ; 90) vissée sur le boîtier (12) et par une butée (34 ; 54 ; 88) prévue sur le boîtier (12).

2. Dispositif de montage de papillon des gaz selon la revendication 1, **caractérisé en ce que** la plaquette d'immobilisation (26 ; 52) est disposée dans une rainure périphérique (32) de l'arbre (14) avec un jeu axial déterminé et est fixée sans jeu axial du côté du boîtier à l'aide de la tôle de fixation (26 ; 56).

3. Dispositif de montage de papillon des gaz selon la revendication 2, **caractérisé en ce que** la plaquette d'immobilisation (52) est conçue en forme de C et peut être introduite latéralement dans la rainure (32).

4. Dispositif de montage de papillon des gaz selon la revendication 2, **caractérisé en ce que** la plaquette d'immobilisation (52) est conçue en deux parties formant des demi-segments (52a, 52b).

5. Dispositif de montage de papillon des gaz selon la revendication 2, **caractérisé en ce que** la tôle de fixation et la plaquette d'immobilisation (26) sont formées en une pièce, l'ouverture pour arbre (28 ; 40) étant conçue en forme de trou de serrure ouvert ou fermé.

6. Dispositif de montage de papillon des gaz selon la revendication 1, **caractérisé en ce que** la plaquette d'immobilisation (82 ; 94) est fixée axialement sur la circonférence de l'arbre et l'intervalle (84 ; 96) du boîtier (12) est défini par une butée axiale (88) et une surface de la tôle de fixation (90).

7. Dispositif de montage de papillon des gaz selon la revendication 6, **caractérisé en ce que** la butée axiale est munie d'un disque de glissement (88).

8. Dispositif de montage de papillon des gaz selon l'une des revendications précédentes, **caractérisé en ce que** la tôle de fixation (26 ; 56 ; 90) est fixée sur le boîtier (12) à l'aide de plusieurs vis.

9. Dispositif de montage de papillon des gaz selon l'une des revendications précédentes, **caractérisé en ce qu'**un potentiomètre (18) servant à la saisie de la position réelle du papillon des gaz (16) est prévu entre le dispositif d'immobilisation axiale le rotor.

10. Dispositif de montage de papillon des gaz selon la revendication 9, **caractérisé en ce que** la plaque de potentiométre (18) est fixée sur le boîtier (12) et le curseur du potentiomètre sur l'axe (14).

11. Procédé d'assemblage d'un dispositif de montage de papillon des gaz (10 ; 50 ; 80) selon l'une des revendications précédentes, **caractérisé en ce que** le dispositif de montage de papillon des gaz est tout d'abord pré-assemblé entièrement et le rotor est seulement finalement emmanché par pression sur l'arbre (14) avant la fermeture du boîtier (12) de papillon des gaz.
